# EUROPÄISCHE PATENTANMELDUNG

(11) **EP 2 508 420 A2**
(43) Veröffentlichungstag der Anmeldung: **10.10.2012**
(21) Anmeldenummer: 12002432.8
(22) Anmeldetag: 04.04.2012
(51) Int. Cl.: B64C 1/14

(54) **Fensterring für ein Flugzeugfenster sowie Verfahren zu dessen Herstellung**

(30) Priorität: 07.04.2011 DE 102011016306
(71) Anmelder: Diehl Aircabin GmbH, 88471 Laupheim (DE)
(72) Erfinder: Becker, Andreas, 89614 Öpfingen (DE); Mäder, Jörg, 89547 Gussenstadt (DE)
(74) Vertreter: Diehl Patentabteilung

(57) **Zusammenfassung**

Die Erfindung betrifft einen Fensterring für ein Fenster eines Flugzeuges, wobei der Fensterring im wesentlichen aus einem lichtleitenden Grundmaterial (1) aufgebaut ist, wenigstens einen Lichteinleitungsbereich (4) zur Einkopplung von Licht in das Grundmaterial (1) sowie wenigstens einen Lichtaustrittsbereich (5,6) aufweist, welcher so ausgebildet ist, dass in ihm in das Grundmaterial (1) eingekoppeltes Licht austritt.

## Beschreibung

### GEBIET DER ERFINDUNG

Die Erfindung bezieht sich auf einen Fensterring für ein Fenster eines Flugzeuges sowie ein Verfahren zur Herstellung des Fensterringes.

### HINTERGRUND DER ERFINDUNG

Derartige Fensterringe bilden eine Einfassung von Flugzeugfenstern. Die Fensterringe weisen im Querschnitt eine kelchartige Form auf, mit einer den Passagieren zugewandten Außenseite und einer abgewandten Innenseite. Ein derartiger Fensterring kann durch entsprechende Beleuchtung aufgewertet werden. Bekannt sind dazu Hinterleuchtungen der Fensterringe. Hierfür werden nach dem Stand der Technik meist milchige Grundmaterialien verwendet, die hinterleuchtet werden.

### ZUSAMMENFASSUNG DER ERFINDUNG

Das Problem dabei ist es, eine gleichmäßige Ausleuchtung zu erreichen. Diese wird meist nur mit einem Mindestabstand der Lichtquelle zur beleuchteten Fläche erreicht, was wiederum die Abmessungen des Fensterringes vergrößert und somit zu Platzproblemen bei der Installation führt.

Es ist Aufgabe der Erfindung, einen Fensterring der eingangs genannten Art anzugeben, der eine möglichst flexibel zu gestaltende und dennoch einfach aufgebaute und wenig Platz erfordernde Beleuchtung aufweist.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Der erfindungsgemäße Fensterring für ein Flugzeugfenster ist im Wesentlichen aus einem lichtleitenden Grundmaterial aufgebaut. Dieses lichtleitende Grundmaterial kann ein transparenter Kunststoff sein. Der Fensterring kann wenigstens einen Lichteinleitungsbereich zur Einkopplung von Licht in das Grundmaterial aufweisen. Ferner ist wenigstens ein Lichtaustrittsbereich vorgesehen, welcher so ausgebildet ist, dass in ihn in das Grundmaterial eingekoppeltes Licht austritt. Der Lichtaustrittsbereich kann an einer beliebigen Position an dem Fensterring vorgesehen sein. Dadurch kann das Licht an einer Position eingekoppelt werden, wo ein ausreichender Freiraum verbleibt.

Ein wesentlicher Aspekt der Erfindung besteht darin, dass der Fensterring bzw. dessen Grundmaterial selbst als Lichtleiter fungiert. Dazu ist das Grundmaterial als lichtleitendes Material ausgeführt, welches somit Licht innerhalb des Fensterringes an gewünschte Lichtaustrittsbereiche leitet. Dadurch sind zu Installation eines erfindungsgemäßen Fensterringes bis auf eine Lichtquelle und entsprechende elektrische Anschlüsse keine zusätzlichen Bauteile erforderlich.

Grundsätzlich kann dazu. Licht von wenigstens einem Lichteinleitungsbereich an die gewünschten Lichtaustrittsbereiche innerhalb des Fensterringes geführt werden. Zur Erzielung eines vorteilhaften Farbeffektes kann das Grundmaterial aus einem eingefärbten Kunststoff gebildet sein. Alternativ kann an den Lichtaustrittsbereichen eine farbige Folie zwischen dem Grundmaterial und dem Lichtaustritt vorgesehen sein.

Der Aufbau des Fensterringes in erfindungsgemäßer Weise ist gegenüber dem Stand der Technik einfach gehalten, jedoch gestaltet das lichtleitende Material eine gezielte Beleuchtung bestimmter Bereiche des Fensterringes. Somit ist die Position der Lichtaustrittsbereiche unabhängig von der Position der Lichtquelle und auch von der Position der Lichteinleitungsbereiche. Mittels des erfindungsgemäßen Fensterringes ist somit möglich, sowohl größere Bereiche des Fensterringes wie auch alternativ gezielt bestimmte Bereiche beispielsweise mit Logos, Symbolen oder Ähnlichen zu beleuchten. Dadurch kann die Wertanmutung des Fensterringes erhöht werden.

Der erfindungsgemäße Fensterring weist infolge der Nutzung des Grundmaterials als Lichtleiter keine nennenswert größeren Abmessungen auf als ein konventioneller nicht beleuchteter Fensterring. Der Fensterring ist einfach und wirtschaftlich herzustellen.

Gemäß einer Ausgestaltung der Erfindung ist der Fensterring wenigstens auf der zum Fenster gerichteten Außenseite des Fensterringes lackiert oder beschichtet und weist in den Lichtaustrittsbereichen keinen Lack oder keine Beschichtung auf. Somit können der oder die Lichtaustrittsbereiche relativ einfach dadurch definiert und gestaltet werden, dass sie im Gegensatz zu der übrigen Außenseite des Fensterringes nicht lackiert und beschichtet sind, so dass in diesen Lichtaustrittsbereichen Licht aus dem Grundkörper des Fensterringes austreten kann. Auch können diese Lichtaustrittsbereiche durch die Gestaltung des Lacks oder der Beschichtung relativ einfach geformt werden, so dass Symbole, Logos oder Ähnliches einfach zu gestalten sind. Die übrigen lackierten bzw. beschichteten Bereiche des Fensterrings bzw. von dessen Außenseite erscheinen nicht beleuchtet.

Zur weiteren Verbesserung des Beleuchtungseffektes des Fensterringes ist gemäß einer weiteren Ausgestaltung der Erfindung vorgesehen, dass der Fensterring an der dem Fenster abgewandten Innenseite mit einem reflektierenden Material oder Lack beschichtet ist. Dadurch wird von dieser dem Fenster abgewandten Seite des Grundkörpers zusätzlich Licht reflektiert und auf die dem Fenster zugewandte Außenseite geworfen. Somit wird der Beleuchtungseffekt auf dieser Seite des Fensterringes, der sichtbar ist und auf dem sich die Lichtaustrittsbereiche befinden, verbessert.

Gemäß einer weiteren Ausgestaltung der Erfindung ist an der dem Fenster abgewandten und somit von außen unsichtbaren Innenseite des Fensterringes ein umlaufender Lichteinleitungsbereich vorgesehen. Ein solcher umlaufender Lichteinleitungsbereich kann vorteilhaft dazu genutzt werden, an einer beliebigen Stelle desselben Licht einzukoppeln.

Er kann ferner vorteilhaft, wie gemäß einer weiteren Ausgestaltung der Erfindung vorgesehen ist, dazu eingesetzt werden, eine ebenfalls umlaufende LED-Lichtleiste an dem Lichteinleitungsbereich vorzusehen, welche somit auf dem gesamten Umfang des umlaufenden Lichteinleitungsbereichs Licht in denselben einkoppelt. Es können auch verschiedenfarbige LED Leuchten verwendet werden.

Für ein Verfahren zur Herstellung eines erfindungsgemäßen Fensterringes ist vorgesehen, dass das lichtleitende Grundmaterial des Fensterringes gespritzt oder tiefgezogen wird und wenigstens auf der zum Fenster gerichteten Außenseite lackiert oder beschichtet wird. Ferner werden der oder die Lichtaustrittsbereiche mittels Laser, Gravur oder Fräser erzeugt.

Somit ist zum einen das Grundmaterial in konventioneller Weise durch Spritzen oder Tiefziehen relativ einfach zu produzieren. Die dem Fenster zugewandte Außenseite kann zunächst vollständig lackiert werden und erst anschließend durch Lasern, Gravieren oder Fräsen mit Lichtaustrittsbereichen versehen werden.

### KURZE BESCHREIBUNG DER ZEICHNUNGEN

Nachfolgend werden einige Ausführungsbeispiele anhand der Zeichnungen näher erläutert. Es zeigen:
Fig. 1: eine schematische Darstellung einer Seitenverkleidung mit einem Flugzeugfenster, welches mit einem erfindungsgemäßen Fensterring ausgestattet ist,
Fig. 2: eine Ansicht eines Flugzeugfensters mit einem erfindungsgemäßen Fensterring, welcher beleuchtete Symbole aufweist,
Fig. 3: schematisch eine Seitenansicht eines Querschnitts durch ein Flugzeugfenster, und
Fig. 4 eine Detailansicht eines Bereichs aus Figur 3.

### DETAILLIERTE BESCHREIBUNG BEISPIELHAFTER AUSFÜHRUNGSFORMEN

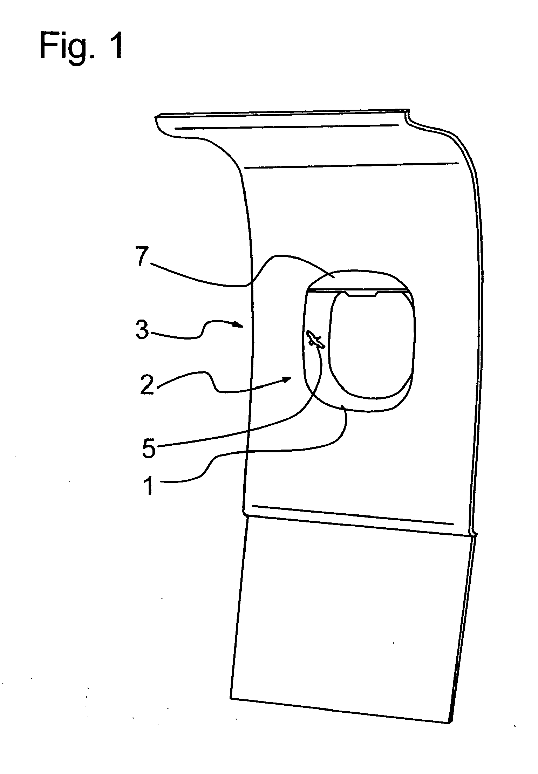

In Fig. 1 ist in schematischer Darstellung eine Seitenverkleidung 3 gezeigt. Die Seitenverkleidung 3 weist ein Fenster 2 mit einem Fensterring 1 auf. Derartige Seitenverkleidungen 3 werden aneinandergereiht in einem nicht dargestellten Flugzeug zur Verkleidung verwendet. Es ist ein erfindungsgemäßer Fensterring 1 vorgesehen, welcher ein Flugzeugfenster 2 umgibt bzw. dieses einfasst.

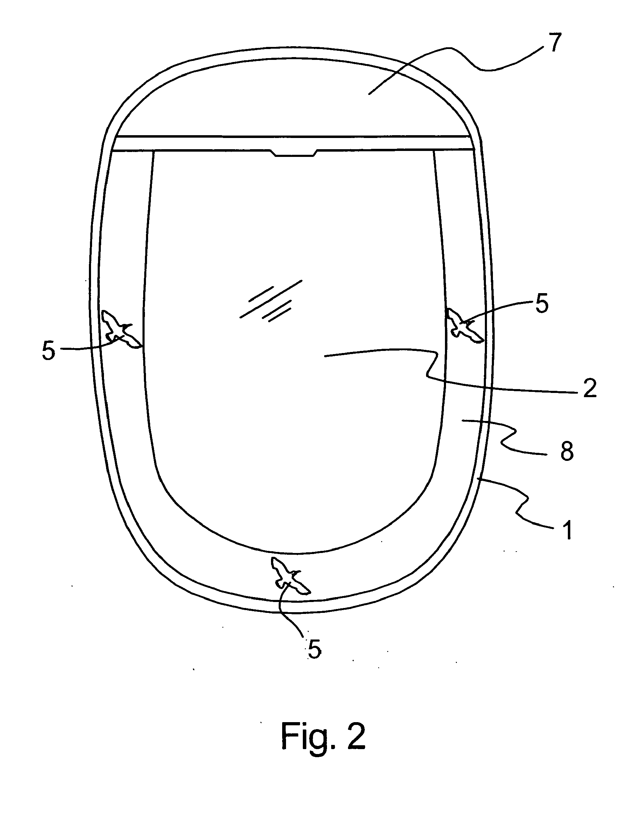

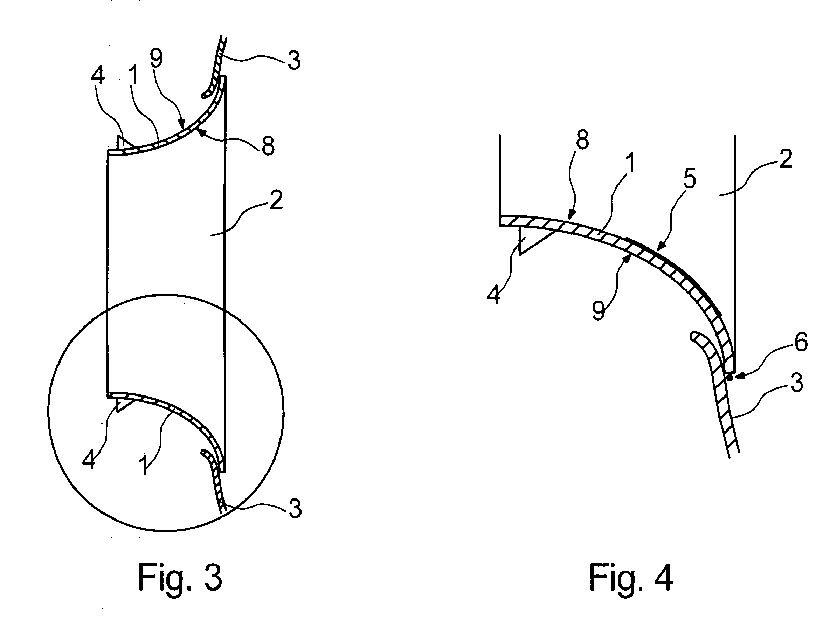

Fig. 2 zeigt ein Flugzeugfenster 2 mit dem erfindungsgemäßen Fensterring 1 gemäß Fig. 1 in Ansicht vom Flugzeuginneren. Am oberen Rand des Fensters 2 ist eine Jalousie 7 vorgesehen. Eine zum Flugzeuginneren bzw. zu dem Fenster 2 gewandte Seite des Fensterringes 2 wird als Außenseite 8 bezeichnet. Eine Innenseite 9 (siehe Fig. 3) weist im montierten Zustand hin zu einer Außenhülle des Flugzeuges und ist somit weder vom Flugzeuginneren noch von Außen sichtbar.

Das Flugzeugfenster 2 wird von dem erfindungsgemäßen Fensterring 1 eingerahmt und weist Lichtaustrittsbereiche 5 auf, die auf der Außenseite 8 des Grundkörpers 1 vorgesehen sind.

In dem Beispiel gemäß Fig. 2 sind über den Umfang des Fensterringes 1 drei derartige Lichtaustrittsbereiche 5 vorgesehen. Diese Lichtaustrittsbereiche 5 können beispielsweise als Symbole, Logos einer Luftfahrtgesellschaft oder Ähnliches ausgebildet sein.

Die Fig. 3 zeigt einen Fensterring 1 im Querschnitt, der an seiner Innenseite 9, die dem Fenster 2 abgewandt ist, einen Lichteinleitungsbereich 4 aufweist, welcher, wie aus der Figur 3 nicht unmittelbar ersichtlich, auf dem gesamten Umfang des Fensterringes 1 an diesem umläuft.

An diesem Lichteinleitungsbereich 4 kann beispielsweise eine ebenfalls um den Umfang umlaufende LED-Leiste vorgesehen sein. Diese kann gegebenenfalls auch verschiedenfarbiges Licht abstrahlen.

Die Außenseite 8 des Fensterringes 1, die dem Fenster 2 zugewandt und vom Flugzeuginneren sichtbar ist, weist erfindungsgemäß einen oder mehrere Lichtaustrittsbereiche 5 auf, welche so ausgebildet sind, dass in den Lichteinleitungsbereich 4 eingekoppeltes Licht auf Lichtaustrittsbereiche 5 geführt wird. Dazu ist der Grundkörper des Fensterringes 1 aus einem lichtleitenden Material aufgebaut, welches somit das Licht von dem Lichteinleitungsbereich 4 zu den Lichtaustrittsbereichen 5 führt.

Dies ist im Detail in Fig. 4 im Ausschnitt näher dargestellt. Der Ausschnitt zeigt einen Teil des Fensters 2 sowie einen Ausschnitt des erfindungsgemäßen Fensterringes 1 mit dem Lichteinleitungsbereich 4. Der Fensterring 1 ist ebenso wie in Fig. 3 in eine Seitenverkleidung 3 eines im Übrigen nicht dargestellten Flugzeuges eingesetzt.

In der Darstellung gemäß Fig. 4 ist der Grundkörper des Fensterringes 1 etwa in einem mittleren Bereich seiner Außenseite 8, die dem Flugzeugfenster 2 zugewandt und von außen sichtbar ist, mit einem Lichtaustrittsbereich 5 versehen. Ebenso ist an dem Grundkörper 1 ein weiterer Lichtaustritt 6 an demjenigen Ende des Fensterringes 1 vorgesehen, das über die Seitenverkleidung 3 des Flugzeuges greift. Der Lichtaustritt 6 kann als ringförmige, das Fenster 2 komplett umgebende Einfassung ausgestaltet sein und das Fenster 2 bzw. den Fensterring optisch von der Seitenwand 3 abgrenzen.

Die Lichtaustrittsbereiche 5 und 6 sind nicht im Bereich der Beleuchtung vorgesehen, vielmehr gelangt das Licht von dem Lichteinleitungsbereich 4 über den in lichtleitendem Material aufgebauten Fensterring 1 an die Lichtaustrittsbereiche 5 und 6.

Zur weiteren Verbesserung des Beleuchtungseffektes kann der Fensterring 1 an seiner dem Fenster 2 abgewandten Innenseite 9 mit einem lichtreflektierenden Material beschichtet sein (mit Ausnahme des Lichteinleitungsbereiches 4), so dass noch mehr Licht auf die Außenseite 8 mit den Lichtaustrittsbereichen geworfen wird. Weiterhin kann der Fensterring 1 aus einem eingefärbten Kunststoff bestehen, so dass die Logos farbig erscheinen.

Somit gestattet der erfindungsgemäße Fensterring eine relativ einfache zu gestaltende und dennoch effektvolle Beleuchtung der Einfassung eines Flugzeugfensters. Er benötigt gegenüber unbeleuchteten Lösungen gemäß dem Stande der Technik wenig oder gar keinen zusätzlichen Raum und ist einfach herzustellen. Die Beleuchtungen können durch Ausfräsen, Gravieren oder Lasern der gewünschten Lichtaustrittsbereiche an beliebigen Stellen und in beliebiger Form erzeugt werden.

### LISTE DER BEZUGSZEICHEN

- 1: Grundmaterial Fensterring
- 2: Flugzeugfenster
- 3: Seitenverkleidung Flugzeug
- 4: Lichteinleitungsbereich
- 5: Lichtaustrittsbereiche
- 6: Lichtaustrittsbereich
- 7: Jalousie Flugzeugfenster
- 8: Außenseite Fensterring
- 9: Innenseite Fensterring

## Patentansprüche

1. Fensterring für ein Fenster eines Flugzeuges, wobei der Fensterring im wesentlichen aus einem lichtleitenden Grundmaterial (1) aufgebaut ist, wenigstens einen Lichteinleitungsbereich (4) zur Einkopplung von Licht in das Grundmaterial (1) sowie wenigstens einen Lichtaustrittsbereich (5, 6) aufweist, welcher so ausgebildet ist, dass in ihm in das Grundmaterial (1) eingekoppeltes Licht austritt.

2. Fensterring nach Anspruch 1, **dadurch gekennzeichnet, dass** der Fensterring wenigstens auf der zum Fenster (2) gerichteten Außenseite (8) lackiert oder beschichtet ist und dass der Lichtaustrittsbereich (5, 6) keinen Lack oder Beschichtung aufweist.

3. Fensterring nach einem der Ansprüche 1 oder 2, **dadurch gekennzeichnet, dass** der oder die Lichtaustrittsbereiche (5, 6) als Beschriftungen, Logos, Symbole oder Ähnliches ausgebildet sind.

4. Fensterring nach einem der Ansprüche 1 bis 3, **dadurch gekennzeichnet, dass** an der dem Fenster (2) abgewandten Innenseite (9) des Fensterringes ein umlaufender Lichteinleitungsbereich (4) vorgesehen ist.

5. Fensterring nach einem der Ansprüche 1 bis 4, **dadurch gekennzeichnet, dass** der Fensterring an der dem Fenster abgewandten Innenseite (9) mit einem reflektierenden Material oder Lack beschichtet ist.

6. Fensterring nach Anspruch 4, **dadurch gekennzeichnet, dass** an dem umlaufenden Lichteinleitungsbereich (4) eine ebenfalls umlaufende LED-Lichtleiste vorgesehen ist.

7. Verfahren zur Herstellung eines Fensterringes nach einem der Ansprüche 1 bis 6, **dadurch gekennzeichnet, dass** das lichtleitende Grundmaterial (1) des Fensterringes gespritzt oder tiefgezogen, wenigstens auf der zum Fenster (2) gerichteten Außenseite (8) lackiert oder beschichtet wird und anschließend der oder die Lichtaustrittsbereiche (5, 6) mittels Laser, Gravur oder Fräser erzeugt werden.

8. Verfahren nach Anspruch 7, **dadurch gekennzeichnet, dass** beim Spritzen oder Tiefziehen des Grundmaterials (1) an dessen dem Fenster (2) abgewandten Innenseite (9) ein umlaufender Lichteinleitungsbereich erzeugt wird.

9. Verfahren nach Anspruch 7, dass der Fensterring zusätzlich an der dem Fenster abgewandten Innenseite (9) mit einem reflektierenden Material oder Lack beschichtet wird.

10. Flugzeugfenster mit einem Fensterring nach einem der Ansprüche 1 bis 6.

11. Flugzeug mit Fenstern, die Fensterringe nach einem der Ansprüche 1 bis 6 aufweisen.
